(19) **Europäisches Patentamt**

**European Patent Office**

**Office européen des brevets**

(11) **EP 1 593 953 A2**

(12) **EUROPÄISCHE PATENTANMELDUNG**

(43) Veröffentlichungstag:
09.11.2005 Patentblatt 2005/45

(51) Int Cl.⁷: **G01N 3/08**

(21) Anmeldenummer: 05101926.3

(22) Anmeldetag: **11.03.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **29.04.2004 DE 102004021133**

(71) Anmelder: **Deutsches Zentrum für Luft- und Raumfahrt e.V.**
**53175 Bonn (DE)**

(72) Erfinder:
• **Hausmann, Joachim**
 **50670, Köln (DE)**
• **Schumann, Hartmut**
 **53819, Neunkirchen-Seelscheid (DE)**
• **Leyens, Christoph**
 **53639, Königswinter (DE)**

(74) Vertreter: **Selting, Günther**
**Patentanwälte**
**von Kreisler-Selting-Werner,**
**Bahnhofsvorplatz 1 (Deichmannhaus)**
**50667 Köln (DE)**

(54) **Verfahren und Vorrichtung zur Prüfung von Fasern**

(57) Zur Prüfung einer Faser (11) wird die Faser zwischen zwei Einspannvorrichtungen (22,43) axial gestaucht, so dass sie ausknickt. Die Einspannvorrichtungen passen sich an die gebogene Faserform an, so dass an den Einspannstellen keine wesentlichen Knickungen erfolgen. Die höchste Belastung ergibt sich im mittleren Bereich der Faserlänge. Dadurch wird bei der Rotation der Faser (11) um ihre Achse eine Verfälschung der Biegebelastung durch die Einspannvorrichtungen vermieden.

EP 1 593 953 A2

**Beschreibung**

Die Erfindung betrifft ein Verfahren und eine Vorrichtung zur Prüfung von Fasern, wobei eine Faser im gebogenen Zustand an einem Ende gedreht wird.

Zur Qualitätssicherung und Charakterisierung von Fasern werden unter anderem mechanische Prüfverfahren eingesetzt. Dies sind in der Regel Zugversuche, bei denen einzelne Fasern oder Faserbündel in einer Prüfmaschine einer Zugbelastung ausgesetzt werden. Dieser Versuch liefert aber nur die Zugfestigkeit als Kennwert und gibt keine Aussage bezüglich der Festigkeit unter schwingender Belastung.

In "Fiber Fatigue Caused by Repeated Longitudinal Compression", Yamashita et al., International Conference on Composite Materials ICCM13, Peking, Juni 2001, ist ein Verfahren beschrieben, das die Ermüdungsfestigkeit von Fasern oder Faserbündeln ermittelt. Hierbei werden Fasern schraubenförmig auf einen Kunststoffzylinder geklebt, der einer Verdrehung ausgesetzt wird. Die Fasern können so allen Kombinationen von Zug- und Drucklasten ausgesetzt werden. Auch hierbei erweist sich die Probenherstellung als aufwendig, die Ergebnisse werden durch den als Hilfsvorrichtung benutzten Kunststoffzylinder verfälscht.

In "Modellierung und Optimierung faserverstärkter Titanlegierungen" von Joachim M. Hausmann, Tenea Verlag für Medien, Berlin 2003, Seiten 74, 75 ist eine Vorrichtung zur Ermittlung der Ermüdungsfestigkeit von Fasern beschrieben, bei der die Faser an beiden Enden in eine Einspannvorrichtung eingespannt wird. Die eine Einspannvorrichtung wird mit einem Motor gedreht. Eine zweite Einspannvorrichtung, deren Ausrichtung gegenüber derjenigen der ersten Einspannvorrichtung verstellbar ist, nimmt das andere Faserende auf. Die Faser wird in gebogenem Zustand um ihre Achse gedreht, wobei ein Zähler die Zahl der Umdrehungen ermittelt.

Der Erfindung liegt die Aufgabe zugrunde, ein Verfahren und eine Vorrichtung zur Prüfung von Fasern anzugeben, wobei der Einfluss der Einspannungen der Faserenden auf das Messergebnis eliminiert wird.

Das erfindungsgemäße Verfahren weist die Merkmale des Patentanspruchs 1 auf und die erfindungsgemäße Vorrichtung die Merkmale des Patentanspruchs 6.

Erfindungsgemäß wird auf eine einzelne Faser eine Drucklast aufgebracht, die zu einem definierten Ausknicken der Faser führt. Die ausgeknickte Faser wird um ihre nun gebogene Mittelachse rotiert. Das Auslenken der Faser durch eine Drucklast hat zum Vorteil, dass im Bereich der Faserenden keine Biegespannungen auftreten und in der Mitte der Faserlänge das Spannungsmaximum vorliegt. Hierdurch wird die Gefahr eines Versagens der Faser im Bereich der Enden minimiert und die Problematik der Lasteinbringung wird vereinfacht. Würde die Faser durch Zwangsausrichtung der an den Enden angreifenden Einspannvorrichtungen gebogen, so würden sich an den Faserenden starke Biegebeanspruchungen ergeben, die einen vorzeitigen Bruch der Faser an den Faserenden zur Folge haben. Ein derartiger Versuch ist daher nicht imstande, die tatsächliche Belastbarkeit der Faser zu ermitteln, weil diese durch den Einfluss der Einspannvorrichtungen auf die Faserenden verfälscht wird. Erfindungsgemäß werden Biegespannungskonzentrationen von den Endbereichen der Faser ferngehalten, so dass die maximale Biegespannung im Abstand von den Faserenden und den Einspannvorrichtungen auftritt.

Gemäß einer bevorzugten Weiterbildung der Erfindung ist vorgesehen, dass die Faser an beiden Enden an Drucklagern abgestützt wird, von denen mindestens eines um eine senkrecht zur Faser verlaufende Achse schwenkbar und unter der Kraft der ausgeknickten Faser frei einstellbar ist. Die Faser wird hierbei durch eine Relativbewegung der Drucklager zum Ausknicken gebracht. Die Drucklager sind dabei so gehalten, dass sie sich den Ausrichtungen der Faserenden anpassen können, so dass wesentliche Biegebeanspruchungen von den Faserenden ferngehalten werden.

Für einige Anwendungen kann die Prüfung der Fasern bei unterschiedlichen Temperaturen erforderlich sein. Hierzu kann die zu prüfende Faser sich in einem Hohlraum befinden, der mit einem heißen oder kalten Gas durchströmt wird. Insbesondere bei hohen Temperaturen ist ein Schutzgas, z. B. Argon, besonders geeignet.

Die Erfindung betrifft ferner ein Prüfverfahren für Fasern, bei dem der Faserbruch dadurch festgestellt wird, dass die Anzahlen der Umdrehungen an beiden Enden der Faser gemessen werden und ein Faserbruch festgestellt wird, wenn die gemessenen Werte voneinander abweichen. Dies ist eine sehr einfach durchzuführende Methode, um einen Faserbruch sicher feststellen zu können.

Unter Fasern werden zylindrische Körper verstanden, die vorzugsweise einen Durchmesser von 4 bis 500 µm und eine Länge von mindestens dem 20-fachen des Durchmessers haben. Die Fasern bestehen aus einem oder mehreren Werkstoffen, insbesondere Glas, Kohlenstoff, Keramik, Kunststoff oder Metall. Fasern können zur Übertragung von Kräften und zur Verstärkung anderer Werkstoffe eingesetzt werden. Weiterhin werden sie zur Übertragung von Energie und Signalen aus Licht oder Elektrizität eingesetzt.

Im folgenden werden Ausführungsbeispiele der Erfindung unter Bezugnahme auf die Zeichnungen näher erläutert.

Es zeigen:

Fig. 1 eine Draufsicht auf eine Vorrichtung zur Prüfung von Fasern im Anfangszustand,

Fig. 2 eine Seitenansicht der Vorrichtung von Fig. 1 aus Richtung des Pfeiles II,

Fig. 3 eine Draufsicht der Vorrichtung während der Prüfung einer Faser,

Fig. 4 eine Draufsicht der Vorrichtung, wobei die Faser in eine Knickung 2. Ordnung gebracht ist,

Fig. 5 eine schematische Darstellung des Knickens 1. Ordnung, und

Fig. 6 eine schematische Darstellung des Knickens zweiter Ordnung.

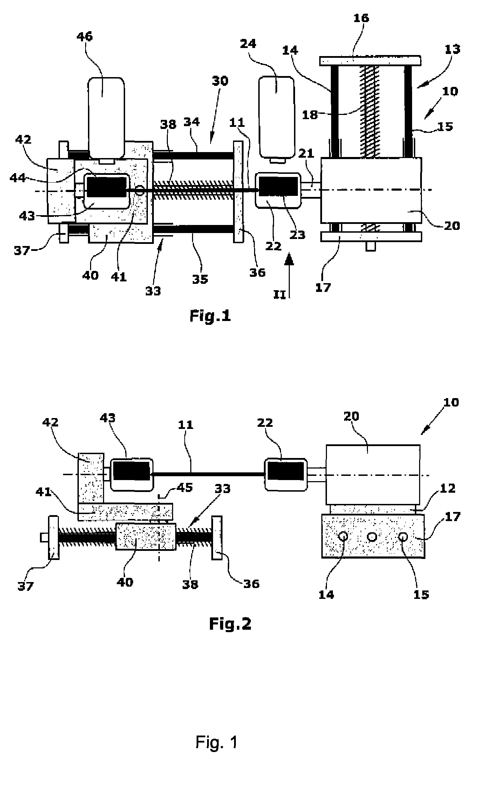

Die in den Figuren 1-4 dargestellte Vorrichtung zur Ermittlung der Ermüdungsfestigkeit einer Faser weist eine erste Verschiebeeinheit 10 für das eine Ende der Faser 11 auf. Die Verschiebeeinheit 10 weist einen Schlitten 12 auf, der entlang einer Führungsbahn 13 linear verschiebbar ist. Die Führungsbahn 13 weist zwei parallele Führungsschienen 14,15 auf, die durch Querjoche 16,17 starr verbunden sind. An den Querjochen 16,17 sind die Enden einer Schraubenspindel 18 gelagert. Das Gewinde der Schraubenspindel 18 ist mit einem Innengewinde des Schlittens 12 in Eingriff, so dass durch Drehen der Schraubenspindel 18 der Schlitten 12 entlang der Führungsbahnen 13 in eine gewünschte Stellung bewegt werden kann.

Auf dem Schlitten 12 ist ein Motor 20 befestigt, an dessen Welle 21 eine Einspannvorrichtung 22 für das eine Ende der Faser 11 angebracht ist. Die Einspannvorrichtung 22 trägt an ihrer Umfangsfläche eine Markierung 23. Ein an dem Schlitten 12 befestigter Impulsgeber 24 erzeugt bei jedem Passieren der Markierung 23 einen elektrischen Impuls, der ausgewertet wird, die Umdrehungen der Welle 21 zu zählen bzw. um die Drehzahl in Umdrehungen pro Minute zu ermitteln.

Rechtwinklig zu der ersten Verschiebeeinheit 10 ist eine zweite Verschiebeeinheit 30 mit einer Führungsbahn 33 angeordnet, die parallele Führungsschienen 34,35 aufweist, welche durch zwei Querjoche 36,37 verbunden sind. In den Querjochen sind die Enden einer Schraubenspindel 38 gelagert, welche parallel zu den Führungsschienen 34,35 verläuft.

Auf den Führungsschienen 34,35 ist ein Schlitten 40 linear verschiebbar geführt. Dieser Schlitten weist ein Innengewinde auf, das in Eingriff mit dem Außengewinde der Schraubenspindel 38 steht. Durch manuelles Drehen der Schraubenspindel 38 kann der Schlitten 40 längs der Führungsschienen 34,35 bewegt werden.

Auf dem Schlitten 40 ist ein Träger 41 derart angebracht, dass der Träger um eine vertikale Achse 45, die rechtwinklig zur Längsachse der Führungsbahnen 33 verläuft, schwenkbar ist. Der Träger 41 ist frei beweglich gelagert, so dass er sich um die Achse 45 ohne äußeren Zwang frei einstellen kann. Auf dem Träger 41 ist ein aufragendes Drucklager 42 angebracht, welches ein horizontales Drehlager für die zweite Einspannvorrichtung 43 enthält. In diesem Drehlager ist die Einspannvorrichtung 43 frei um eine horizontale Achse drehbar. Die Einspannvorrichtung 43 trägt an ihrem Umfang eine Markierung 44, auf die ein am Träger 41 befestigter Impulsgeber 46 reagiert, um ähnlich wie der Impulsgeber 24 elektrische Signale zu erzeugen, deren Anzahl der Anzahl der Umdrehungen entspricht.

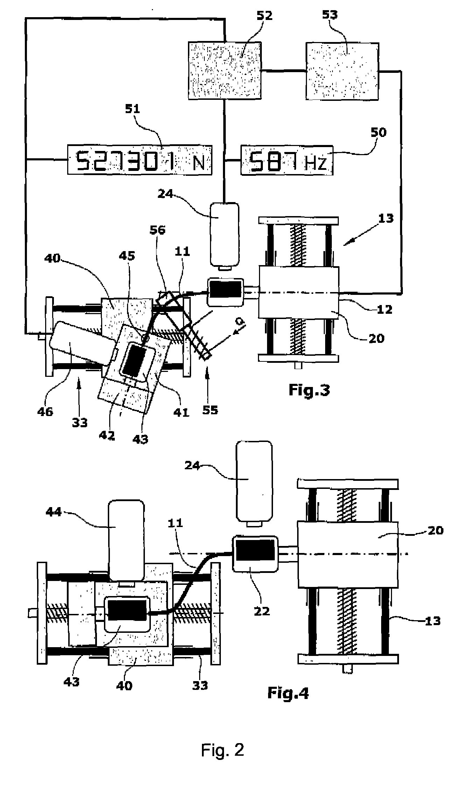

Bei der Benutzung der Prüfvorrichtung werden die Einspannvorrichtungen 22 und 43 in den in Fig. 1 dargestellten Einbauzustand gebracht, in welchem ihre Achsen entlang einer geraden Linie zueinander ausgerichtet sind. Die Achse der Einspannvorrichtung 43 verläuft parallel zur Achse der zugehörigen Führungsbahn 33. Die Achse der Einspannvorrichtung 22 verläuft - in Draufsicht - rechtwinklig zu der Achse der zugehörigen Führungsbahn 13. Die Einspannvorrichtungen werden gemäß Fig. 1 und Fig. 2 entlang einer geraden Linie ausgerichtet und an ihnen werden die Enden der Faser 11 befestigt, derart, dass die Faser 11 sich im gestreckten (spannungslosen) Zustand befindet. Dann wird durch Betätigen der Schraubenspindel 38 der Schlitten 40 vorwärts bewegt, wobei die Faser 11 axial gedrückt, d. h. gestaucht, wird. Die Faser versucht darauf hin seitlich auszuweichen. Dies geschieht durch Schwenken des Trägers 41 um die Achse 45. Der Träger 41 stellt sich also unter der Kraft der Faser 11 frei ein. Dies hat zur Folge, dass die Faser sich unter Bildung eines sinusförmigen Verlaufs deformieren kann. Hierbei verlaufen die Faserenden axial zu den Einspannvorrichtungen, ohne an den Einspannvorrichtungen geknickt zu werden.

Die Verschiebeeinheit 10, auf der der Motor 20 befestigt ist, ermöglicht einen translatorischen Ausgleich von Biegemomenten der Faser 11 im Bereich der Einspannvorrichtung 22.

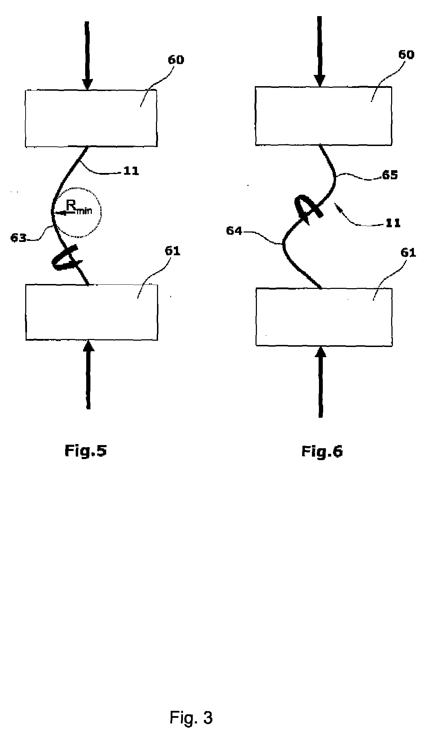

Die Überwachung der Rotation der Faser 11 wird durch die berührungslosen Impulsgeber 24 und 46 ermöglicht, die die Markierungen 23 und 44 auf den Einspannvorrichtungen 22 und 43 erfassen. Der Impulsgeber 24 ist mit einer Frequenzanzeige 50 verbunden (Fig. 3), um die Drehfrequenz zu erfassen. Der Impulsgeber 46 ist mit einem Zähler 51 verbunden, mit dem die Gesamtzahl der Umdrehungen erfasst wird. Beide Impulsgeber 24 und 46 sind mit einer Gleichlaufüberwachung 52 verbunden, die im Falle fehlender Koinzidenz zwischen den gelieferten Impulszahlen einen Faserbruch feststellt. In diesem Fall wird ein Signal zum Stoppen an die Motorsteuerung 53 gesandt.

Zur Prüfung von Fasern bei einer von der Umgebungstemperatur abweichenden Temperatur ist eine Temperiereinheit 55 vorgesehen. Diese besteht aus einem Rohrstück 56, durch das die Faser quer hindurchgeführt wird, so dass sie im Bereich der maximalen Biegung von dem das Rohr durchströmenden Gasstrom orthogonal angeströmt wird. Das Gas kann Luft oder ein Schutzgas, z. B. Argon, sein. Es kann durch eine Heizvorrichtung oder Kühlvorrichtung temperiert werden. Durch Versuche mit verschiedenen Gasen, z. B. Sauerstoff, Luft und Argon, kann auch der Einfluss der Oxidation auf die Faserfestigkeit untersucht werden.

In Fig. 3 ist der Zustand dargestellt, dass die Faser 11 einer Knickung 1. Ordnung durch Verschieben des Schlittens 40 ausgesetzt wird. Hierbei wird der eine Schlitten 12 quer zur ursprünglichen Faserausrichtung verschoben, so dass die Faser einen einzigen Bogen bildet, wie dies in Fig. 3 dargestellt ist.

Fig. 4 zeigt einen Zustand, der Knickung 2.

Ordnung. Hierbei nimmt die Faser 11 einen S-förmigen Zustand an. Der Träger 41 wird gegen Drehung um die Achse 45 fixiert, so dass die Einspannvorrichtung 43 ihre axiale Ausrichtung parallel zu der Führungsbahn 33 beibehält. Hierbei sind die Einspannvorrichtungen 22 und 43 parallel zueinander ausgerichtet, jedoch in Querrichtung versetzt. Die Faser 11 nimmt zwei gegenläufige Biegungen an, wobei sich jede dieser Biegungen im Abstand von der jeweiligen Einspannvorrichtung 22,43 befindet.

Fig. 5 zeigt eine Prinzipdarstellung des Knickens 1. Ordnung bei einer Faser 11, die mit ihren Enden an Widerlagern 60,61 abgestützt ist. Die Wiederlagern werden aufeinander zu bewegt, wodurch die Faser 11 seitlich ausbiegt und einen Knick 63 bildet. Die Biegelinie der ausgeknickten Faser entspricht einer Sinusfunktion. Von Interesse ist der kleinste Biegeradius $R_{min}$, der sich auf der Mitte der Faserlänge einstellt. Dieser lässt sich aus dem Kehrwert der 2. Ableitung der Biegelinie ermitteln. Das Dehnungsmaximum $\varepsilon_{max}$ in der Faser kann durch

$$\varepsilon_{max} = \frac{r_f}{R_{min}}$$

Gleichung 1 beschrieben werden.

$r_f$ ist der Radius der Einzelfaser und $R_{min}$ der minimale Biegeradius gemäß Fig. 5.

Hiernach werden weitere Fasern mit einer geringeren Belastung als der zuvor ermittelten quasistatischen Festigkeit, d. h. größerem Biegeradius in die Vorrichtung aufgenommen, so dass diese zunächst nicht brechen. Die Fasern werden dann so lange einer Rotation ausgesetzt bis diese brechen. Dadurch lässt sich die Lebensdauer in Abhängigkeit der Belastung bestimmen.

Fig. 6 zeigt den Verlauf der Faser 11 bei einer Knickung 2. Ordnung, bei der sich zwei generell sinusförmige Biegungen 64,65 ergeben. Erfindungsgemäß sind die Einspannvorrichtungen 22,43 in Richtung der jeweiligen Faserenden eingestellt bzw. orientiert, so dass die zwischen den Widerlagern hervorgerufene Stauchung keine wesentliche Biegung oder Knickung an den Faserenden hervorruft.

In einem Versuchsbeispiel folgte die Ermittlung der Ermüdungsfestigkeit einer SiC-Faser mit einem Durchmesser von 142 µm. Diese weist im quasistatischen Zugversuch eine Bruchdehnung $\varepsilon_{max}$ von ca. 1 % auf. Diese Dehnung wird nach Gleichung 1 bei einem Biegeradius von 7,1 mm erreicht. Dadurch, dass das erfindungsgemäße Verfahren des Ausknickens der Faser die Dehnung sehr lokal auftritt, können von dem keramischen Material der Faser höhere Dehnungen ertragen werden. Daher wird in einem Vorversuch zunächst die quasistatische Bruchdehnung mit der beschriebenen Vorrichtung bestimmt.

**Patentansprüche**

1. Verfahren zur Prüfung von Fasern, bei welchem eine Faser (11) in gebogenem Zustand an einem Ende gedreht wird, **dadurch gekennzeichnet**, dass die Faser (11) **dadurch** in den gebogenen Zustand versetzt wird, dass sie einer Drucklast ausgesetzt wird und dabei ausknickt.

2. Verfahren nach Anspruch 1, **dadurch gekennzeichnet, dass** die Faser (11) an einem Ende mit einem Drucklager (5) abgestützt wird, das um eine senkrecht zur Faser verlaufende Achse 45 schwenkbar und unter der Kraft der ausknickenden Faser frei einstellbar ist.

3. Verfahren nach Anspruch 1 oder 2 **dadurch gekennzeichnet, dass** die Prüfung unter veränderbaren Temperaturen der Faser erfolgt.

4. Verfahren nach einem der Ansprüche 1 bis 3 **dadurch gekennzeichnet, dass** die Faser mit einer Atmosphäre aus zugeführtem Gas umgeben wird.

5. Verfahren zur Prüfung von Fasern, bei welchem eine Faser (11) in gebogenem Zustand an einem Ende gedreht wird, **dadurch gekennzeichnet, dass** die Anzahlen der Umdrehungen an beiden Enden der Faser (11) gemessen werden und ein Faserbruch festgestellt wird, wenn die gemessenen Werte voneinander abweichen.

6. Vorrichtung zur Prüfung von Fasern, mit Einspannvorrichtungen (22,43) zum Einspannen der Faserenden, wobei eine Einspannvorrichtung (22) von einem Motor (20) angetrieben ist, **dadurch gekennzeichnet, dass** eine Einspannvorrichtung (43) entlang einer ersten Führungsbahn (33) in Richtung auf die andere Einspannvorrichtung (22) bewegbar ist und dass die andere Einspannvorrichtung (22) entlang einer zweiten Führungsbahn (13), die rechtwinklig zu der ersten Führungsbahn (33) verläuft, bewegbar ist.

7. Vorrichtung nach Anspruch 6, **dadurch gekennzeichnet, dass** die eine Einspannvorrichtung (43) auf einem entlang der ersten Führungsbahn (33) verschiebbaren Schlitten (40) um eine Achse (45) frei schwenkbar angebracht ist.

8. Vorrichtung nach Anspruch 7, **dadurch gekennzeichnet, dass** der Schlitten (40) einen um die Achse (45) schwenkbaren Halter (41) trägt, der ein Drucklager (42) zum Abstützen der Einspannvorrichtung (43) aufweist.

9. Vorrichtung nach einem der Ansprüche 7 bis 8, **dadurch gekennzeichnet, dass** die Einspannvorrichtungen (22,43) mit Markierungen (23,44) versehen sind, auf die ein Impulsgeber (24,46) anspricht.

10. Vorrichtung nach einem der Ansprüche 6 bis 9, **dadurch gekennzeichnet, dass** zwischen den Einspannvorrichtungen (22,43) eine Temperiereinheit (55) und/oder Gas-Zuführvorrichtung zum Anblasen der Faser (11) vorgesehen ist.

**Fig.1**

**Fig.2**

Fig. 1

52  53

51

$$5\ 2\ 7\ 3\ 0\ 1\ \text{N}$$   $$5\ 8\ 7\ \text{Hz}$$   50

24

13

56

40   45   11

12

20

Fig.3

46   33   41   55

42   43

24

44   11   20

22

43   40   33   13

Fig.4

Fig. 2

7

**Fig.5**

**Fig.6**

Fig. 3